(19) Europäisches Patentamt / European Patent Office / Office européen des brevets

(11) **EP 3 137 205 B1**

(12) **EUROPEAN PATENT SPECIFICATION**

(45) Date of publication and mention of the grant of the patent:
**30.01.2019 Bulletin 2019/05**

(21) Application number: **15785788.9**

(22) Date of filing: **30.04.2015**

(51) Int Cl.:
**B01F 17/00** *(2006.01)*     **G01N 11/06** *(2006.01)*
**G01N 9/00** *(2006.01)*     **G01N 13/00** *(2006.01)*

(86) International application number:
**PCT/IB2015/053142**

(87) International publication number:
**WO 2015/166443 (05.11.2015 Gazette 2015/44)**

(54) **AN INSTRUMENT AND METHOD FOR QUANTITATIVE DETERMINATION OF PHYSICOCHEMICAL PROPERTIES OF CHEMICAL SUBSTANCES**

INSTRUMENT UND VERFAHREN ZUR QUANTITATIVEN BESTIMMUNG VON PHYSIOCHEMISCHEN EIGENSCHAFTEN VON CHEMISCHEN SUBSTANZEN

INSTRUMENT ET PROCÉDÉ UTILISABLES EN VUE DE LA DÉTERMINATION QUANTITATIVE DES PROPRIÉTÉS PHYSICO-CHIMIQUES DE SUBSTANCES CHIMIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2014 IN 1314MU2014**

(43) Date of publication of application:
**08.03.2017 Bulletin 2017/10**

(73) Proprietor: **Singh, Man**
**Gandhi Nagar, Gujarat 382030 (IN)**

(72) Inventor: **Singh, Man**
**Gandhi Nagar, Gujarat 382030 (IN)**

(74) Representative: **Cabinet Plasseraud**
**66, rue de la Chaussée d'Antin**
**75440 Paris Cedex 09 (FR)**

(56) References cited:
**WO-A1-01/22056     GB-A- 1 303 708**
**GB-A- 1 350 624     US-A- 3 881 344**
**US-A- 4 583 395     US-B1- 6 393 898**

- **ROBERT J. YOUNG ET AL. INTRODUCTION OF POLYMERS 27 June 2011, page 303, XP008185276**
- **'FACTS SINTEF PETROLEUM RESEARCH EXPLORATION TECHNOLOGY' INTERFACIAL TENSION MEASUREMENT April 2011, XP055394302**

**Description**

**FIELD OF THE INVENTION**

The present invention relates to an instrument and method for quantitative determination of different physicochemical properties of chemical substances. Further, the instrument is capable of determining these properties under the influence external forces such as electrical, thermal or magnetic fields.

**BACKGROUND OF THE INVENTION**

The publication " Introduction To Polymer", Third Edition by Robert J. Young and Peter A. Lovell presents synthesis, characterization, properties of polymer.

French physicist Pierre Lecomte du Nouy proposed a method for measuring surface tension. From then onwards no advancement for measuring surface tension was made except the Wilhelmy plate method. In case of viscosity measurement, Ostwald viscometer, Cannon viscometer and Stalagmometer are known to be in existence since a long time. These instruments and methods for measuring surface tension and viscosity separately have been known since a long time and no advancement has been made for measuring these parameters together by a single instrument.

Further no single instrument is available for measurement of viscosity, surface tension, interfacial tension, wetting coefficient, contact angle and friccohesity. Therefore, it is a need of the art to have a single instrument which can measure these physicochemical properties of chemical substances. It is also needed to have an instrument which can measure these physicochemical properties under the influence of electrical, thermal or magnetic fields.

Therefore, there is need for such instruments as valuable chemical compounds of different structural, geometrical and electrical natures are being synthesized and developed and are being used for most critical applications in medical and physical areas. Hence, it is essential to integrate the study of these properties and the other related properties. Publications US 4 583 395 A and US 6 393 898 B1 also disclose instruments of particular interest.

**OBJECTIVE OF THE INVENTION**

The objective of the invention is to provide a single instrument and method for measuring the viscosity, surface tension, interfacial tension, wetting coefficient, contact angle and friccohesity for a given chemical substance.

Yet another objective of the invention is to provide a single instrument and method for measuring other related physicochemical properties for a given chemical substance.

It is another objective of the present invention to provide an instrument and method for determining the physicochemical properties for a given chemical substance under the influence external forces such as electrical, thermal or magnetic fields.

**SUMMARY OF THE INVENTION**

According to an aspect of the present invention, an instrument is provided for quantitative determination of physicochemical properties of a chemical substance, said instrument comprising a first capillary vertically connected to a reservoir bulb at its bottom end, said first capillary is used for loading liquid sample of the chemical substance whose chemical property is to be determined; a CPU bulb connected to the reservoir bulb by a U-shaped capillary such that the CPU bulb is positioned a higher level than the reservoir bulb; and three capillaries namely second, third and fourth capillary being placed parallel to each other and parallel to the first capillary and being allowed to open in the CPU bulb; wherein the said instrument is dipped in a liquid filled jacket in order to isolate and insulate it from any external effects, such that the openings of the four capillaries remain outside the liquid.

According to another aspect of the present invention, an instrument is provided, wherein the second capillary is inserted in the CPU bulb from its top end, said capillary opens in the center of the CPU bulb.

According to yet another aspect of the present invention, an instrument is provided, wherein the third capillary and fourth capillary are connected to the CPU bulb adjacent to its top end.

According to one more aspect of the present invention, an instrument is provided, wherein second and the third capillaries have buffer bulbs and functional bulbs along their length, buffer bulb being positioned at a higher level than the functional bulb.

According to still another aspect of the present invention, an instrument is provided, wherein the third and fourth capillaries are bent at their proximal ends preferably at the angle of 30° to 60° before being connected with the CPU bulb.

According to another aspect of the present invention, an instrument is provided, wherein the reservoir bulb, CPU bulb, buffer bulbs and functional bulbs are selected to have a spherical, elliptical, cylindrical or cuboidal shape.

According to yet another aspect of the present invention, an instrument is provided, wherein the jacket is made of transparent material and is filled with transparent liquid.

According to one more aspect of the present invention, an instrument is provided, wherein the liquid inside the liquid filled jacket is temperature controlled.

According to still another aspect of the present invention, an instrument is provided, wherein the first capillary is capable of receiving a separate capillary namely IFT capillary for measuring interfacial tension between two liquids, such that one liquid has higher density than the other, said IFT capillary having a buffer bulb and a functional bulb along its length.

According to another aspect of the present invention, an instrument is provided, wherein the capillaries, bulbs are fitted with sensors at several locations to automatically indicate level of sample liquid.

According to yet another aspect of the present invention, an instrument is provided, wherein the second and the third capillary are coiled between the functional bulb and the CPU bulb for tracking rotational and stretching molecular motions.

According to one more aspect of the present invention, an instrument is provided, wherein the second or the third capillary is optionally fitted with a heating element placed between the functional bulb and the CPU bulb to note the impact of heat on the molecular dynamics and record the change in physicochemical properties.

According to still another aspect of the present invention, an instrument is provided, wherein the second or the third capillary is optionally fitted with an electrical element placed between the functional bulb and the CPU bulb to note the impact of electric current on the molecular dynamics and record the change in physicochemical properties.

According to another aspect of the present invention, an instrument is provided, wherein the buffer bulb and the functional bulb of the second or the third capillary is optionally fitted with a magnetic element to note the impact of magnetic field on the molecular dynamics and record the change in physicochemical properties.

According to yet another aspect of the present invention, an instrument is provided, wherein the second or the third capillary is optionally having a spiral shaped capillary between the functional bulb and the CPU bulb to note its impact on the molecular dynamics and record the change in the physicochemical properties.

According to one more aspect of the present invention, a method of measuring viscosity of a chemical solution by the aforementioned instrument, said method comprising allowing a solution of known density to be filled in reservoir bulb till a marked level 'L'; closing the top openings of second and fourth capillaries; inserting a plunger barrel assembly in the top opening of the third capillary; allowing with the plunger barrel assembly, the solution into the third capillary such that the functional bulb is filled fully and the buffer bulb is filled 2/3$^{rd}$ of its capacity; withdrawing the stopper from the fourth capillary so that the solution starts to fall in the third capillary; recording the time 't' taken by the solution to fall from a pre-indicated level above the functional bulb to a pre-indicated level below the functional bulb; repeating steps (a) to (e) for solvent of known density and viscosity and recording time '$t_0$' taken by said solvent to fall from a pre-indicated level above the functional bulb to a pre-indicated level below the functional bulb; and calculating the viscosity of the solution by inputting the value of t and $t_0$ in:

$$\eta = \left[ \left( \frac{t}{t_0} \right) \left( \frac{\rho}{\rho_0} \right) \right] \eta_0 \qquad (1)$$

wherein t and $t_0$ are viscous flow times, $\rho$ and $\rho_0$ densities, $\eta$ and $\eta_0$ are viscosities of solution and solvent respectively.

According to another aspect of the present invention, a method of measuring surface tension of a chemical solution by the aforementioned instrument, said method comprising allowing a solution of known density to be filled in reservoir bulb till a level 'L'; closing the top openings of third and fourth capillaries; inserting plunger barrel assembly in the top opening of the second capillary; allowing through the plunger barrel assembly, the solution into the second capillary such that the functional bulb is filled fully and the buffer bulb is filled 2/3$^{rd}$ of its capacity; withdrawing the stopper from the fourth capillary so that the solution starts the fall in the second capillary; recording the number of drops 'n' that fall from the second capillary into the CPU bulb when the solution falls from a pre-indicated level above the functional bulb to a pre-indicated level below the functional bulb; repeating steps (a) to (e) for solvent of known density and surface tension and recording number of drops '$n_0$' of said solvent when the solvent falls from a pre-indicated level above the functional bulb to a pre-indicated level below the functional bulb; and calculating the surface tension of the solution by inputting the value of n and $n_0$ in:

$$\gamma = \left[ \left( \frac{n_0}{n} \right) \left( \frac{\rho}{\rho_0} \right) \right] \gamma_0 \qquad (2)$$

wherein n and $n_0$ are number of drops, $\rho$ and $\rho_0$ densities, $\gamma$ and $\gamma_0$ are surface tension of solution and solvent respectively.

According to still another aspect of the present invention, a method of measuring interfacial tension IFT between two immiscible liquids having different densities by the aforementioned instrument is provided, said method comprising allowing a liquid of lower density to be filled in reservoir bulb till a level 'L'; filling the functional bulb and 2/3rd of the buffer bulb of the IFT capillary with a liquid of higher density with the plunger barrel assembly; inserting the higher density liquid filled IFT capillary into the first capillary such that the lower end of the IFT capillary dips in the liquid of lower density present in the reservoir bulb; withdrawing the plunger barrel assembly from the IFT capillary; recording the number of drops '$n_{HDL\ in\ LDL}$' of liquid of higher density that fall from the IFT capillary into the liquid of lower density in the reservoir bulb when the liquid of higher density falls from a pre-indicated level indicated above the functional bulb to a pre-indicated level indicated below the functional bulb; repeating steps (a) to (e) for recording the number of drops '$n_{HDL\ in\ air}$' of liquid of higher density that fall from the IFT capillary into the empty reservoir bulb when the liquid of higher density falls from a pre-indicated level indicated above the functional bulb to a pre-indicated level indicated below the functional bulb; and calculating the IFT between two immiscible liquids having different densities by inputting the value of '$n_{HDL\ in\ LDL}$' and '$n_{HDL\ in\ air}$' in following equation:

$$\gamma_{IFT} = \left( \frac{n_{HDL\,in\,air}}{n_{HDL\,in\,LDL}} \right) \left( \frac{\rho_{HDL} - \rho_{LDL}}{\rho_{HDL}} \right) \gamma_{HDL} \quad (3)$$

wherein '$n_{HDL\ in\ LDL}$' and '$n_{HDL\ in\ air}$' are numbers of drops of high density liquids in low density liquids and high density liquids in air, $\rho_{HDL}$ and $\rho_{LDL}$ are densities of liquid of higher density and liquid of lower density respectively and $\gamma_{HDL}$ is surface tension of HDL.

According to one more aspect of the present invention, a method of determining wetting coefficient of a sample liquid by the aforementioned instrument, said method comprising allowing the sample liquid to be filled in reservoir bulb till a level 'L'; inserting a closed IFT capillary in the liquid in the reservoir bulb; withdrawing the socket and recording the height 'h' that the liquid in time 't' rises from the lower tip of the IFT capillary; and calculating the wetting coefficient by:

$$\frac{\eta h^2}{t} = w_c^{\ 0} + A\gamma + B\gamma^2 \qquad (4)$$

wherein 'h' is the height risen by liquid in time 't', A and B are coefficients, $\gamma$ is surface tension and $\eta$ viscosity of the sample liquid.

According to an aspect of the present invention, an instrument is provided which measures different physicochemical properties such as viscosity, surface tension, interfacial tension, wetting coefficient, contact angle and friccohesity for a given chemical substance.

According to another aspect of the present invention, an instrument is provided which measures different physicochemical properties such as viscosity, surface tension, interfacial tension, wetting coefficient, contact angle and friccohesity for a given chemical substance under the influence external forces such as electrical, thermal or magnetic fields.

According to yet another aspect of the present invention, an instrument is provided which quantitatively determines molecular motions, refractive index, heat, potential, pH and conductance of ionic liquids, pi-conjugated systems, surfactants, proteins, webdrimers, supercritical liquids, dyes, zwitterions, protein separation and stress and strain.

According to a further aspect of the present invention, an instrument is provided which determines optical density, heat capacity, enthalpy, entropy, tentropy, entroenthalpy, chemical potential, quantitative determination of cohesive forces to hydrogen bonding, quantitative determination of hydrogen bond in similar molecules (HB-SM) and hydrogen bonding in dissimilar molecular (HB-DM) are the models which are most critical issues as static and dynamic mixtures have been used for varieties of applications.

## DETAIL DESCRIPTION OF FIGURES

Further aspects and advantages of the present invention will be readily understood from the following detailed description with reference to the accompanying drawings. Reference numerals have been used to refer to identical or similar functionally similar elements. The figures together with a detailed description below, are incorporated in and form part of the specification, and serve to further illustrate the embodiments and explain various principles and advantages, in accordance with the present invention wherein:

Figure 1, illustrates a basic instrument for measuring structure oriented physicochemical properties.

Figure 2, illustrates an instrument for measuring interfacial tension between liquids of different densities.

Figure 3, illustrates the basic instrument fitted with several sensors for measuring structure oriented physicochemical properties.

Figure 4, illustrates a uniform glass capillary for tracking molecular dynamics responsible for physicochemical properties.

Figure 5, illustrates a coiled uniform glass capillary for tracking rotational and stretching molecular motions oriented physicochemical properties.

Figure 6, illustrates a uniform glass capillary fitted with heat and electric conducting elements and sensors for tracking molecular dynamics.

Figure 7, illustrates a uniform glass capillary fitted with heat and electric conducting elements and sensors for measuring surface tension and viscosity and tracking molecular dynamics.

Figure 8, illustrates a coiled glass capillary fitted with heat and electric conducting elements and sensors for tracking molecular dynamics.

Figure 9, illustrates coiled glass capillaries fitted with heat and electric conducting elements and sensors for tracking viscoelastic, rotational and stretching molecular motions oriented physicochemical properties (MMO-PCP).

Figure 10, illustrates a coiled glass capillary fitted with magnetic elements and sensors for tracking impact of magnetic field on structure oriented physicochemical properties (MMO-PCP).

Skilled artisans will appreciate that elements in the drawings are illustrated for simplicity and have not necessarily been drawn to scale. For example, the dimensions of some of the elements in the drawings may be exaggerated relative to other elements to help to improve understanding of embodiments of the present invention.

## DETAILED DESCRIPTION OF THE INVENTION

Referring now to the drawings, there is shown an illustrative embodiment of the instrument for quantitative determination of physicochemical properties of chemical substances. It should be understood that the invention is susceptible to various modifications and alternative forms; specific embodiment thereof has been shown by way of example in the drawings and will be described in detail below. It will be appreciated as the description proceeds that the invention may be used in other types of horns and may be realized in different embodiments.

Before describing in detail embodiments it may be observed that the novelty and inventive step that are in accordance with the present invention reside in the construction of the apparatus for quantitative determination of physicochemical properties of chemical substances, accordingly, the drawings are showing only those specific details that are pertinent to understanding the embodiments of the present invention so as not to obscure the disclosure with details that will be readily apparent to those of ordinary skill in the art having benefit of the description herein.

The terms "comprises", "comprising", or any other variations thereof, are intended to cover a non-exclusive inclusion, such that a setup, device that comprises a list of components does not include only those components but may include other components not expressly listed or inherent to such setup or device. In other words, one or more elements in a system or apparatus proceeded by "comprises... a" does not, without more constraints, preclude the existence of other elements or additional elements in the system or apparatus. The following paragraphs explain various aspect of the present invention with reference to figures.

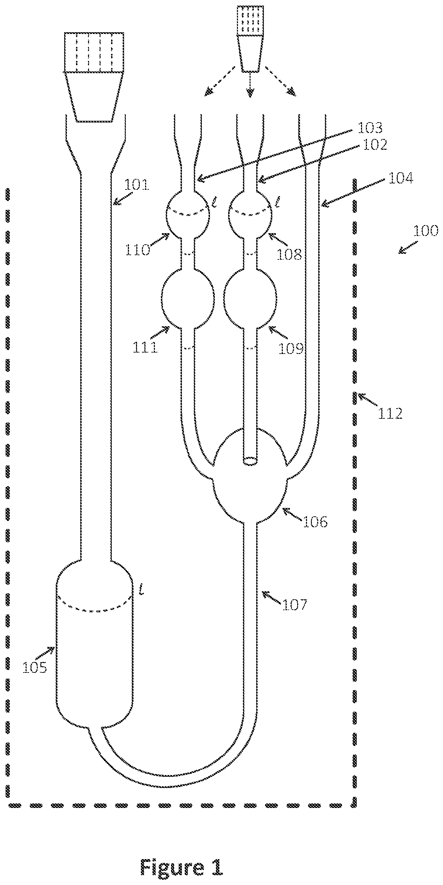

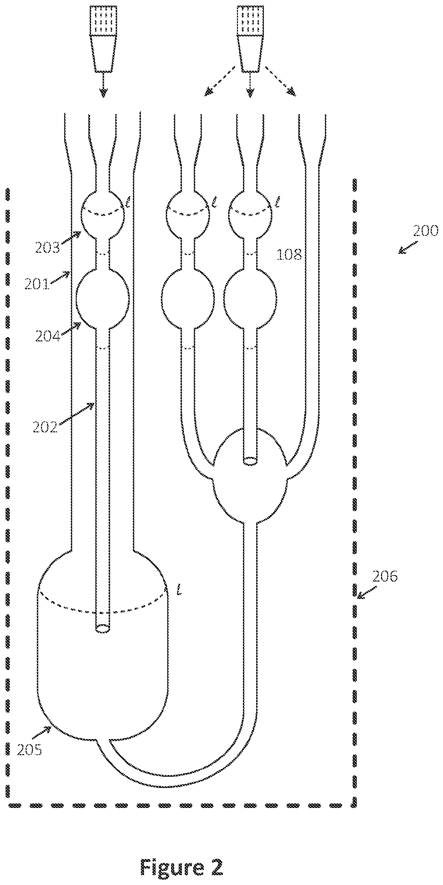

Figures 1 and 2, illustrate an instrument for measuring various structure oriented physicochemical properties in accordance with an embodiment of the present invention. These structure oriented physicochemical properties are surface tension, viscosity, interfacial tension (IFT), wetting coefficient (WC), contact angle and friccohesity of chemical substances.

The instrument 100 as illustrated in figure 1 is leveled by focusing at its essential parts. The instrument comprises of a first capillary 101 vertically connected to a reservoir bulb 105 at its bottom end. The reservoir bulb has a capacity between 18mL to 22mL. In a preferred embodiment, the reservoir bulb has a capacity of 20mL. The first capillary 101 is used for filling liquid sample of the chemical substance whose chemical property is to be determined. The liquid sample is filled till a level 'L' as indicated in the reservoir bulb 105. This level 'L' will allow a volume of around 12mL to 15mL of the sample to be filled in the reservoir bulb.

A controlled pressure unit or a CPU bulb 106 is connected to the reservoir bulb 105 by a U-shaped capillary 107. The CPU bulb 106 is positioned at a higher level than the reservoir bulb 105. The CPU bulb 106 regulates bypassing a liquid to separate capillaries that are further connected to the CPU bulb. The CPU bulb develops an air valve and is noted as pressure made air valve (PMAV) in distance mode. The CPU bulb has three capillaries namely second 102, third 103 and fourth 104 capillary opening in it from the top. These three capillaries are placed parallel to each other and parallel to the first capillary 101. More specifically, the second capillary 102 is inserted in the CPU bulb 106 from its top end. This capillary 102 opens in the center of the CPU bulb 106. The third capillary 103 and fourth capillary 104 are connected to the CPU bulb 106 at a point adjacent to its top end. In an embodiment, the third and the fourth capillaries are bent at an angle between 30°C to 60°C before being connected with the CPU bulb. The end at which these capillaries are bent is referred to as proximal end as it is in close proximity to the CPU bulb. In a preferred embodiment the third and the fourth capillaries are bent at an angle of 45 °C before being connected with the CPU bulb.

The second 102 and the third 103 capillaries have buffer bulbs 108, 110 and functional bulbs 109, 111 along their length. Buffer bulbs 108, 110 are positioned at a higher level than the functional bulbs 109, 111. In one embodiment, the functional bulbs are of 7ml to 9ml capacity and the buffer bulbs are of 4ml to 6ml capacity. In a preferred embodiment, the functional bulbs are of 8ml capacity and the buffer bulbs are of 5ml capacity. The fourth capillary does not have any bulbs and develops an air valve. In other words, the fourth capillary is used to maintain or return to atmospheric pressure while performing measurements for different properties. The reservoir bulb, CPU bulb, buffer bulbs or functional bulbs are selected to either have a spherical or elliptical or cylindrical or cuboidal shape.

The whole instrument is dipped in a liquid filled jacket 112 in order to isolate and insulate it from any external effects. The openings of the four capillaries remain outside the liquid. The jacket is made of transparent material and is filled with transparent liquid. The liquid inside the liquid filled jacket is temperature controlled.

A method of measuring viscosity of a chemical solution by the above instrument 100 is described. The instrument 100 is first washed and dried. After dipping the instrument in the liquid filled transparent jacket 112, the sample chemical solution of known density is filled in the reservoir bulb 105 till a marked level 'L'. The sample is allowed to equilibrate in the reservoir bulb 105 at a desired temperature and molecular motions are stabilized. Thereafter, the openings of second 102 and fourth 104 capillaries are closed. With the help of a plunger barrel assembly the solution is allowed to fill into the third capillary 103 such that the functional bulb 111 is filled fully and the buffer bulb 110 is filled 2/3$^{rd}$ of its capacity. The 2/3$^{rd}$ level in the buffer bulb 110 can be marked as level 'I' for ease of the user. Upon reaching the 2/3$^{rd}$ level, the plunger barrel assembly is withdrawn from the third capillary 103 and also the stopper from the fourth capillary 104 is withdrawn. The solution will start falling in the third capillary 103. With the help of a stop watch or a like device, time 't' taken by solution to fall from a pre-indicated level above the functional bulb 111 to a pre-indicated level below the functional bulb 111 is recorded. This pre-indicated level above the functional bulb 111 will be marked between the functional bulb 111 and the buffer bulb 110 and the pre-indicated level below the functional bulb 111 will be marked between the functional bulb 111 and the CPU bulb 106.

Aforesaid steps are repeated for the solvent of a known density and viscosity to record time '$t_0$' taken by said solvent to fall from a pre-indicated level above the functional bulb 111 to a pre-indicated level below the functional bulb 111.

Thereafter, the viscosity of the solution is calculated by inputting the value of t and $t_0$ in:

$$\eta = \left[\left(\frac{t}{t_0}\right)\left(\frac{\rho}{\rho_0}\right)\right]\eta_0 \qquad (1)$$

wherein t and $t_0$ are viscous flow times, $\rho$ and $\rho_0$ densities, $\eta$ and $\eta_0$ are viscosities of solution and solvent respectively. The above steps are repeated three times till a concordant reading is reproduced.

A method of measuring surface tension of a chemical solution by the above mentioned instrument 100 is described. The instrument 110 is first washed and dried. After dipping the instrument 100 in the liquid filled transparent jacket 112, the sample chemical of known density is allowed to be filled in reservoir bulb 105 till a level 'L'. The sample is allowed to equilibrate in the reservoir bulb 105 at a desired temperature and molecular motions are stabilized. Thereafter, the top openings of third 103 and fourth 104 capillaries are closed and a plunger barrel assembly is inserted in the top opening of the second capillary 102. Through the plunger barrel assembly, the solution is filled in the second capillary 102 such that the functional bulb 109 is filled fully and the buffer bulb 108 is filled 2/3rd of its capacity. The 2/3$^{rd}$ level in the buffer bulb 108 can be marked as level 'I' for ease of the user. Thereafter, the plunger barrel assembly is withdrawn from the second capillary 102 and the stopper is withdrawn from the fourth capillary 104. Due to this the solution starts the fall in the second capillary 102. The user can then record the number of drops 'n' that fall from the second capillary 102 into the CPU bulb 105 during the duration noted by fall of solution from a pre-indicated level above the functional bulb 109 and a pre-indicated level below the functional bulb 109. This pre-indicated level above the functional bulb 109 will be marked between the functional bulb 109 and the buffer bulb 108 and the pre-indicated level below the functional bulb 109 will be marked between the functional bulb 109 and the CPU bulb 106.

Aforesaid steps are repeated for the solvent of known density and surface tension for recording number of drops '$n_0$' of said solvent when the solvent falls from a pre-indicated level above the functional bulb 109 and a pre-indicated level below the functional bulb 109. Thereafter, the surface tension of the solution is calculated by inputting the value of n and $n_0$ in:

$$\gamma = \left[\left(\frac{n_0}{n}\right)\left(\frac{\rho}{\rho_0}\right)\right]\gamma_0 \qquad (2)$$

wherein n and $n_0$ are number of drops, $\rho$ and $\rho_0$ densities, $\gamma$ and $\gamma_0$ are surface tension of solution and solvent respectively. The above steps are repeated three times till a concordant reading is reproduced.

Figure 2 illustrates an instrument 200 for measuring interfacial tension (IFT) between two chemical substances.

A separate capillary namely IFT capillary 202 is inserted into the first capillary 201. With the help of this capillary and the instrument 200, interfacial tension between two liquids, where one liquid has higher density than the other, can be measured. The IFT capillary 202 has a buffer bulb 203 and a functional bulb 204 along its length with buffer bulb 203 being at a higher level than the functional bulb 204.

A method of measuring interfacial tension IFT between two immiscible liquids having different densities by the aforementioned IFT capillary 202 and the instrument 201 is described. The instrument 201 and the IFT capillary 202 are completely dried. The sample liquid of lower density is filled in reservoir bulb 205 of the instrument 200 till a level 'L'. The sample is allowed to equilibrate in the reservoir bulb 205 at a desired temperature and molecular motions are stabilized. The sample liquid of higher density is filled in the functional bulb 204 and 2/3$^{rd}$ of the buffer bulb 203 of the IFT capillary with the plunger barrel assembly. The higher density liquid filled IFT capillary 202 is then inserted in the reservoir bulb 205 that has the liquid with lower density such that the lower end of the IFT capillary 202 dips in the liquid of lower density in the reservoir bulb 205. Thereafter the plunger barrel assembly is withdrawn from the IFT capillary 202. As the liquid of higher density starts to fall in the IFT capillary 202, the user can start recording the number of drops 'nHDL in LDL' of liquid of higher density that fall from the IFT capillary 202 into the liquid of lower density in the reservoir bulb 205. The drops are recorded for the fall of liquid from a pre-indicated level indicated above the functional bulb 204 to a pre-indicated level indicated below the functional bulb 204.

Aforementioned steps are repeated for recording the number of drops 'nHDL in air' of liquid of higher density that fall from the IFT capillary 202 into the empty reservoir bulb when the liquid of higher density falls from a pre-indicated level indicated above the functional bulb 204 to a pre-indicated level indicated below the functional bulb 204. Based upon these two values, the user can calculate the interfacial tension between the two immiscible liquids having different densities by inputting the value of 'nHDL in LDL' and 'nHDL in air' in following equation:

$$\gamma_{IFT} = \left(\frac{n_{HDL\,in\,air}}{n_{HDL\,in\,LDL}}\right)\left(\frac{\rho_{HDL} - \rho_{LDL}}{\rho_{HDL}}\right)\gamma_{HDL} \qquad (3)$$

wherein 'nHDL in LDL' and 'nHDL in air' are numbers of drops of high density liquids in low density liquids and high density liquids in air, $\rho$HDL and $\rho$LDL are densities of liquid of higher density and liquid of lower density respectively and $\gamma_{HDL}$ is surface tension of HDL.

With the above instrument 200 and the IFT capillary 202, a user can also determine the wetting coefficient of a sample liquid.

A liquid is filled in the reservoir bulb 205 till a level 'L'. The sample is allowed to equilibrate in the reservoir bulb at a desired temperature and molecular motions are stabilized. A closed and empty IFT capillary 205 is inserted in the liquid in the reservoir bulb 205. Thereafter, the socket from the IFT capillary 202 is withdrawn and the height 'h' that the liquid in time 't' rises from the lower tip of the IFT capillary 202 is recorded. The user can then calculate the wetting coefficient by:

$$\frac{\eta h^2}{t} = w_c^{\ 0} + A\gamma + B\gamma^2 \qquad (4)$$

wherein 'h' is the height risen by liquid in time 't', A and B are coefficients, $\gamma$ is surface tension and $\eta$ viscosity of the sample liquid.

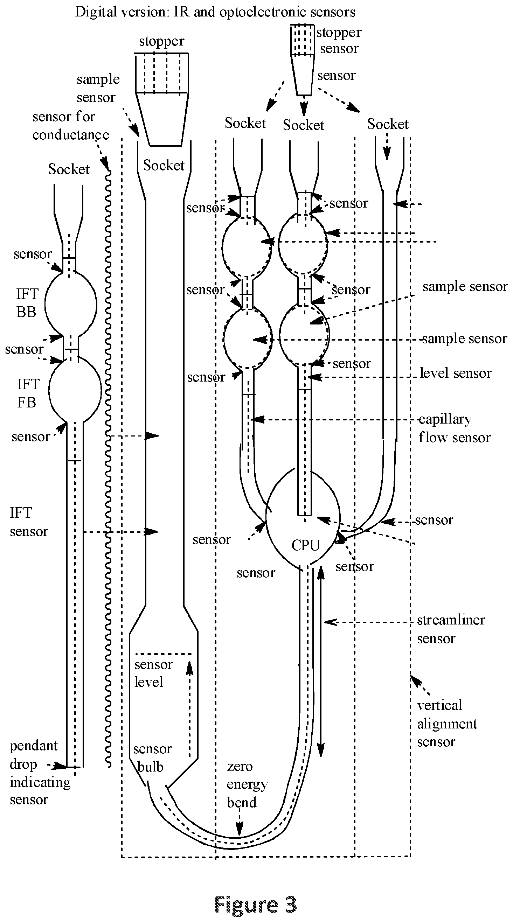

Figure 3 illustrates the same instrument as shown in figure 1 along with several sensors. These sensors are selected from infrared (IR) or optoelectronic sensors. The sensors are fitted at several locations on the apparatus to sense and indicate the level of a liquid sample during measurements of different physicochemical properties in the liquid column. The sensors are also fitted at the openings of the capillaries or the stoppers such that the opening and closing of capillaries is also sensed and indicated. More particularly, a sensor is fitted to sense and indicate that a particular liquid/solution has reached a level 'L' in the reservoir bulb. Other sensors are fitted to sense and indicate the pre-indicated level above the functional bulb and the pre-indicated level below the functional bulb in the second and the third capillary. A sensor may also be fitted to count the number of drops that drop from the second capillary while measuring surface tension. Another sensor is also fitted to count the number of drops that drop from the IFT capillary in the reservoir bulb while measuring IFT between two liquids of different densities. Sensors are also placed to sense and indicate that the liquid/solution has reached 2/3rd level in the buffer bulb of second or third capillary. By the use of sensors, the errors can be reduced and faster results can be obtained.

By the use of sensors the recording for the time 't' for liquid to drop in third capillary from a pre-indicated level above the functional bulb to a pre-indicated level below the functional bulb in case of determination of viscosity for a particular solution is done automatically.

In same manner, determination of surface tension for a particular solution can be done. For measurement of surface tension, the sensors in the second capillary sense the level of solution to drop from a pre-indicated level above the functional bulb to a pre-indicated level below the functional bulb and simultaneously count the number of drops of the solution that drop in the CPU bulb.

Similarly, interfacial tension (IFT) between two liquids of different density can be determined. The sensors fitted at the pre-indicated level above the functional bulb and at the pre-indicated level below the functional bulb sense the liquid level while another sensor counts the number of drops of liquid that drop from IFT capillary in the reservoir bulb.

In one embodiment, the sensors in the instrument are linked to a processor such that the processor is able to execute the information fed in by different sensors and according to a preset algorithm, determine the particular physicochemical property automatically. Also, the processor is equipped with a keyboard interface, where the user can input different values noted by him while determining the variable in a measurement of particular physicochemical property. In another aspect the processor is linked to a display screen where the value of the desired physicochemical property is displayed after determination by the processor.

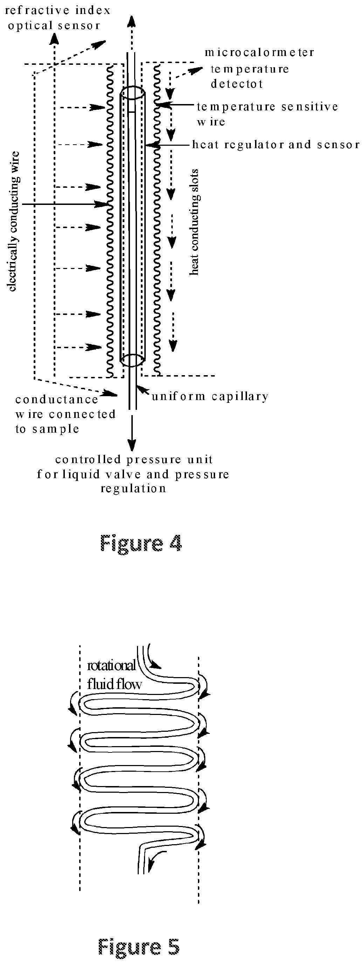

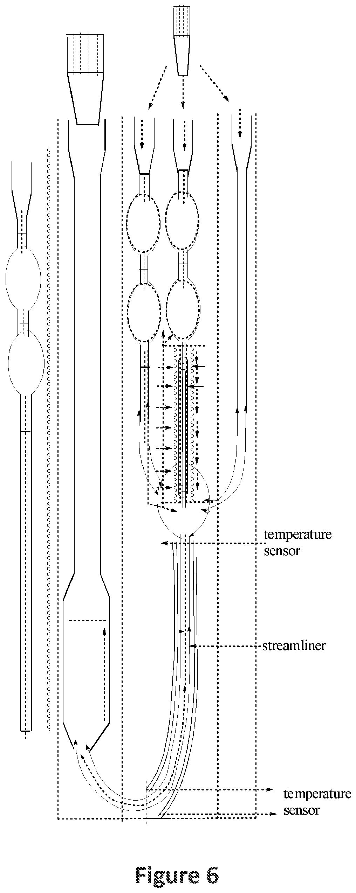

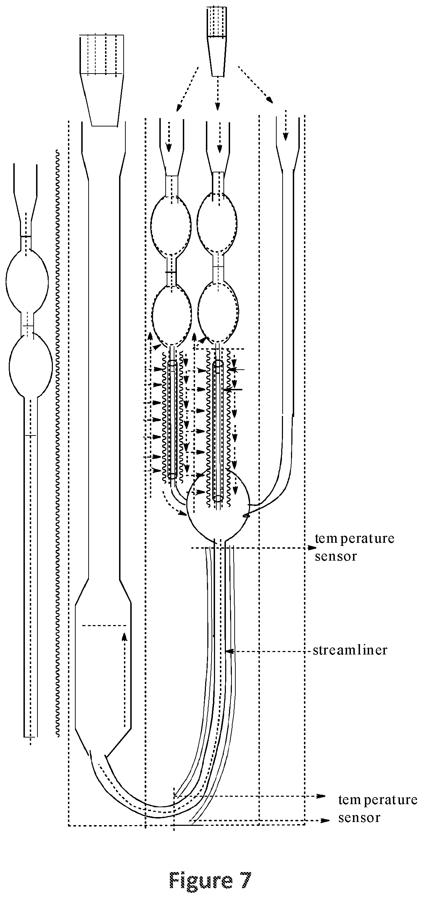

Figure 4 illustrates a uniform glass capillary for tracking molecular dynamics responsible for physicochemical properties. This uniform glass capillary may be assembled between the CPU and one of the functional bulbs as illustrated in figures 6 and 7. More particularly, figure 4 illustrates a uniform glass capillary which may be fitted with heat regulator for regulating temperature of the chemical/solution and thereby noting the thermal impact on the flow rate on molecular motions of the chemical. Figure 3 also illustrates electric wires for conducting electric current fitted onto the uniform glass capillary for noting the impact of electric current on the molecular motions of the chemical. With such fitment of either of heat regulator or electric conductor, brownian motions, vibrational motions of several chemical substances is studied.

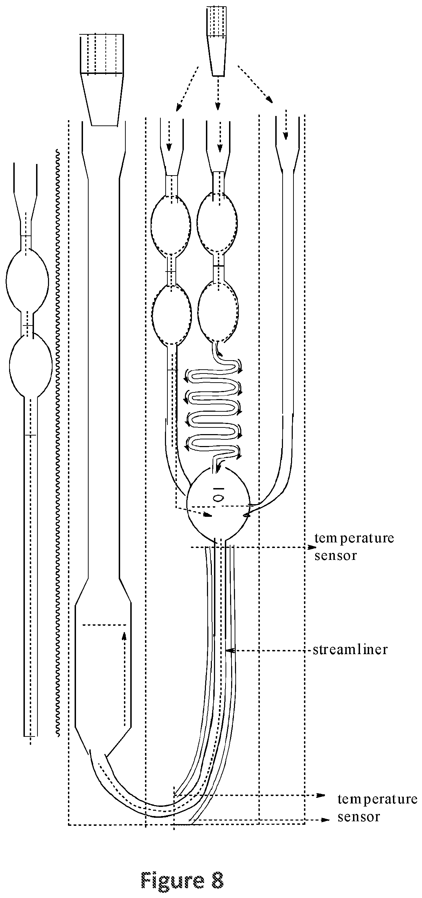

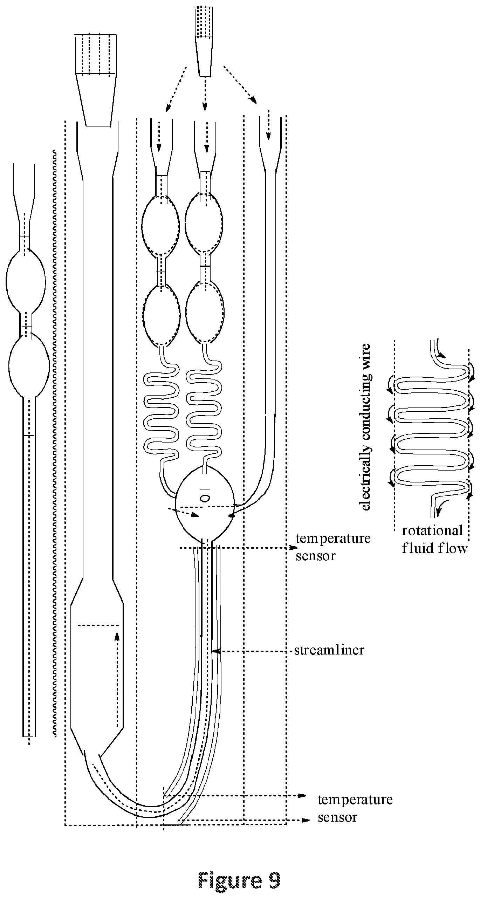

Figure 5 illustrates a coiled glass capillary for tracking rotational and stretching molecular motions oriented physicochemical properties of the chemical substance present in the capillary. Figures 8 and 9 illustrate the location of the coiled glass capillary on the apparatus.

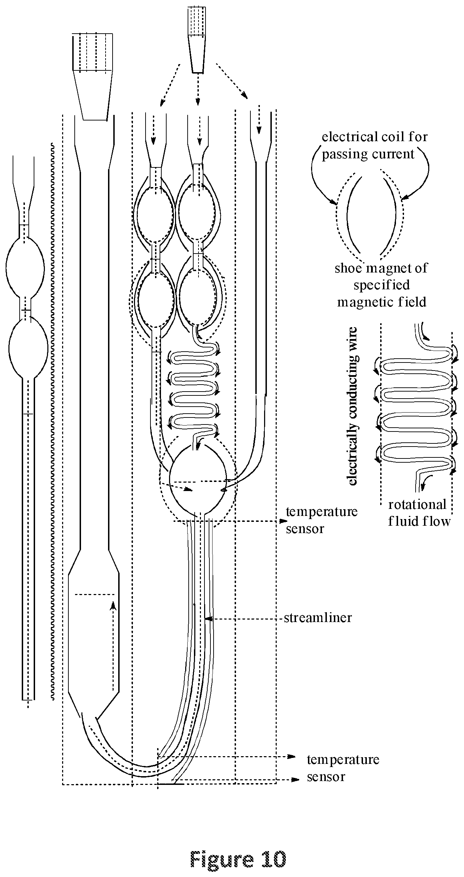

Figure 10 illustrates a coiled glass capillary fitted with magnetic elements and sensors for tracking impact of magnetic field on structure oriented physicochemical properties (MMO-PCP). The type of magnet used can be a shoe magnet as per an embodiment of the present invention.

With this invention following properties of chemical can be studied:

1. Rotational fluid flow motion.
2. Fluid flow under variable electric current.
3. Flow fluid under variable temperature.
4. Magnetic effect on fluid flow and viscoelastic properties.
5. Viscoelastic estimation of giant molecules, dendrimers.
6. Effect of electric current on giant molecules, dendrimers.
7. Enthalpy determination of the molecules in variable solvents.
8. Density determination of the sample through oscillatory stretching.
9. Density measurements using temperature change.
10. Streamlining of the molecules aligning in a particular.
11. Dipole-dipole and induced dipole interactions.
12. Kinetodynamics of biomolecules and catalysts.
13. Study of hydrodynamics and solvodynamics.
14. Philosophy of pressure made air valve (PMAV) in distance mode or pseudo valve.
15. Oscillatory metallic substrate as stable foil for density determination.
16. Thermally sensitive upper critical solutions.
17. Density of upper critical solutions using friccohesity.

**Outreach in trapping hidden interface of hetero-molecular interaction**

Contribution of shared electron pair (SEP) in causing interaction on shifting SEP from less to more electronegative atom induces spontaneity and force factorization in close vicinity of molecules in liquid state. Liquid state is a flexible medium and favors reorientation of targeted molecules for developing interactions considered as an energy utilization process. A shift in SEP contributes to heteromolecular response and similar kinds of shift remains operative in similar molecular frameworks like water and water. However, it is more prominent in heteromolecular forces because of a distance between heteromolecules where Coulombic forces at certain distance become favorable but in similar molecules the lower atomic distance have possibility to cause repulsion.

1. So there are serious drawbacks in existing theories to specifically illustrate the total operative forces and friccohesity of them operative during their involvement in HMI.
2. During HMI the isotropy of molecules matter a lot and existing equations and concepts are not able to take into account the overall contributions of molecular geometry and geometrical components such bond length, single, double or triple bonds, pi-conjugation, hyper or super hyper conjugation, dimerization, cyclization, aggregation, ionization, SEP shift.
3. For accounting contributions of critical and geometrical components, it is felt that some new hypothesis and fundamentals must be evolved for understanding the HMI in an advanced manner and easy way to the students who start chemistry learning at a very intial stage.
4. Such hypothesis could boost up better understanding of supramolecules, webdrimers, dendrimers, protein unfolding, docking supramolecules, aggregation of nanoparticles, hydration pattern and drug-dendrimer complexes because the heteromolecules prominent interact in such processes.
5. Also understanding of a critical oscillating interface between the hydrophilic and hydroponic interactions listed as entroenthalpic depicted with tentropy model.
6. Developing a clear science at liquid-liquid interfaces in case of solvodynamics of mutual solubilization of miscible liquids.

**Fundamental hypothesis for HMI**

Considering above mentioned difficulties in absence of missing some most wanted and effective models and their possible applications in molecular interaction engineering, the new constructive hypothesis is developed and named as Tohesive forces (TF) contrary to cohesive forces or IMF in mixtures such as nanoemulsion, syrups, gels, ionic liquids, molecular liquids and others.

**Tohesive force: Definition and hypothesis**

Tohesive force is a total operative force being applied between two or more than two heteromolecules caused due to a shift in SEP and determined from level of interactions and inductions visible in expressions of structural parameters namely physicochemical properties such as friccohesity, viscosity, surface tension, tentropy, conductance and others. The TF may have far reaching impacts on structure breaking or making consequences for innovative mode and superseding previous steps in search of real advancement. TF is a hardcore heteromolecular interaction index controlled by nature of the heteromolecules involved in process. The main player of TF is degree of a shift in SEP in a close vicinity of heteromolecules in liquid state with certain level of polarity and electronegativity. Expression of friccohesity data directly assess strength of HMI, for example, molecular complex of higher or lowers MP.

**Critical disadvantages of existing theory of CF and IMF**

TF concept is a hardcore model in dealing with heteromolecular sciences or heteromolecular interaction engineering for an easy understanding of real interacting mechanism among them. The heteromolecular collisions, combinations especially of heteromolecular catalysts have never been critically studied in liquid states except gaseous systems where TF holds a least. In general, there is always a concept that the CF operates between similar molecules and also at the same time in dissimilar molecules but there is no crystal clear distinguishion which incorporates all the essential components in interaction process or in catalysts, complexes of heteromolecules, responsible for HMI so that the scientists can easily understand the interactions between heteromolecules that incorporates the factors responsible for causing and developing interactions. There is a concept of IMF which is also applicable for similar molecules that really lead to develop a confusion vis-à-vis IMF between the dissimilar molecules. Thus upto now there is no any effective concept or idea, phenomenon or version that defines and incorporates the parts of the molecular factors responsible for interactions in heteromolecules.

**Mathematical equation for better expression of TF**

Several equations such as van der Waals equation proposed by van der Waals and Coulombic equation proposed by Coulomb for expression of CF and IMF are in use. The van der Waals force is an intermolecular force including Keesom force caused due to permanent dipole-permanent dipole, London Dispersion force caused by induced dipole-induced dipole and Debye force due to permanent dipole-induced dipole. Comparatively, Keesom is strongest exclusively covalent of course and Debye is also near Keesom but the London Dispersion is a weakest force. Thus, the several scientists based on reason and knowledge to determine comprehension molecular action had attempted to explain development and contribution of molecular forces. Their models do not clearly distinguish the CF and the TF and still the confusion exist and element of better understanding remains in backgrounds which are equally applicable for both the forces. Thereby, there are certain force factors caused by dipole-dipole interactions within similar molecules caused due to their dipolar state with interacting activities. The other equations which attempts to study new concept is miserably failed to give a clear picture of interactions of heteromolecular. Therefore, equation for TF determination gives a deep understanding of HMI and the factors responsible for HMI are also explained. The scientists have given a hypothesis for composing the force factors which contribute to HMI and constitutionally explain the MHI. The CF is all right but for formulations, determination of TF level is essential. Thus, the opening and establishment of TF especially in materials sciences, nanoemulsions, dyes, docking proteins, supramolecules, are aimed to develop new understanding of the science of molecular friccohesity with better tentropic changes in hydrophilic and hydrophones interactions.

**Constitutionally heteromolecules need an equation for TF**

The TF contrary to CF is a force developed between the two or more components of dissimilar molecules such as dendrimers, supramolecules, water and surfactants on mixing together for forming nanoemulsions. TF is a highly applicable force in material sciences, heat holding and acoustic molecules contrary to CF. TF depends on orientation, chemical constitution and exchange of energy through their oscillations of charged poles that attract the atoms of other molecules is close proximity in liquid molecules. However such approach is not applicable to gas molecules due to a least TF. Here, the PV= nRT could be noted as TF.

$$TF = P_i + E_a + A_s + F_g + N_d$$

The $P_i$ is polarity of species i, $E_a$ number of electronegative atoms in molecules, $A_s$ atomic stretching, $F_g$ number of functional groups, $N_d$ number of double or triple bonds in molecules. In case of all the molecules, the interactions between two heteromolecules, these parameters constitutionally affect their reorientation, intensity approach, solubilizing ability, atomic stretching, functional groups and many other properties. Thereby, science and technology being an intuitive discipline exploring new dimensions and vision and thus being involved in creative, curative, explorative and riskphilic process the TF is really a marvelous approach ahead. Sometimes, such approach becomes so fruitful, productive and result oriented that the new parameters and devices are discovered and developed to a workable level. For example, in molecular dynamics apart from cohesive forces (CF) (operative in interactions among similar molecules) and kinetic forces (KF) or intermolecular forces (IMF) (responsible in causing interaction between dissimilar molecules) being two separate structural directives and responsible for molecular behavior involving ionic, hydrophilic, hydrophobic, aggregation, solvation, solvodynamics and hydration behave within their restrictive boundaries.

However, mutual transformation of CF and IMF have never been attended and encashed for developing new scientific development. That is why transformation of CF into IMF on mixing two or more than two molecular moieties together has been a most fascination science in solution chemistry. The mixing pattern is controlled and defined with a style and method of distribution and transformation of CF into IMF and an interface between them leads to develop friccohesity, a new physicochemical parameter. The friccohesity defines critical points on a scale of transformation of CF to IMF which passes through a critical point where a specific ratio of CF:IMF generates some specific physicochemical indicators. For a long it has been seen that how we can apply friccohesity to biocatalyst, hormones, enzymes and proteins. The friccohesity is determined by survismeter and is calculated with mansingh equation.

**ADVANTAGES OF THE PRESENT INVENTION**

1. The advantage of the invention is to provide a single instrument for measuring the viscosity, surface tension, interfacial tension, wetting coefficient, contact angle and friccohesity for a given chemical substance.

2. Another advantage of the invention is to provide a single instrument for measuring other related physicochemical properties for the given chemical substance.

3. One more advantage of the invention is to provide an instrument that is capable of determining physicochemical properties under the influence external forces such as electrical, thermal or magnetic fields.

**Claims**

1.  An instrument (100) for quantitative determination of physicochemical properties of a chemical substance, said instrument (100)comprising:

    a first capillary (101) vertically connected to a reservoir bulb (105) at its bottom end, said first capillary (101) is used for loading liquid sample of the chemical substance whose chemical property is to be determined;
    a CPU bulb (106) connected to the reservoir bulb (105) by a U-shaped capillary (107) such that the CPU bulb (106) is positioned at a higher level than the reservoir bulb (105); and
    **characterized in that**
    three capillaries namely second, third and fourth capillary (102, 103, 104) are placed parallel to each other and parallel to the first capillary (101) and are allowed to open in the CPU bulb (106);
    the said instrument (100) is dipped in a liquid filled jacket (112) in order to isolate and insulate it from any external effects, such that the openings of the four capillaries remain outside the liquid.

2.  The instrument (100) as claimed in claim 1, wherein the second capillary (102) is inserted in the CPU bulb (106) from its top end, said capillary opens in the center of the CPU bulb (106).

3.  The instrument (100) as claimed in claim 1, wherein the third capillary (103) and fourth capillary (104) are connected to the CPU bulb (106) adjacent to its top end.

4.  The instrument (100) as claimed claim 1, wherein second and the third capillaries (102, 103) have buffer bulbs (108, 110) and functional bulbs (109, 111) along their length, buffer bulb (108, 110) being positioned at a higher level than the functional bulb (109, 111).

5.  The instrument (100) as claimed in claim 1, wherein the third and fourth capillaries (103, 104) are bent at their proximal ends preferably at the angle of 30° to 60° before being connected with the CPU bulb (106).

6.  The instrument (100) as claimed in any of above claims, wherein the reservoir bulb (105), CPU bulb (106), buffer bulbs (108, 110) and functional bulbs (109, 111) are selected to have a spherical, elliptical, cylindrical or cuboidal shape.

7.  The instrument (100) as claimed in claim 1, wherein the jacket is made of transparent material and is filled with transparent liquid.

8.  The instrument (100) as claimed in claim 1, wherein the liquid inside the liquid filled jacket (112) is temperature controlled.

9.  The instrument (100) as claimed in claim 1, wherein the first capillary (101) is capable of receiving a separate capillary namely IFT capillary (202) for measuring interfacial tension between two liquids, such that one liquid has higher density than the other, said IFT capillary (202) having a buffer bulb (203) and a functional bulb (204) along its length.

10. The instrument (100) as claimed in claim 1, wherein the capillaries, bulbs are fitted with sensors at several locations to automatically indicate level of sample liquid, sense the number of drops that drop in the CPU bulb (106) or the reservoir bulb (105).

11. The instrument (100) as claimed in claim 1, wherein the second and the third capillary (102, 103) are coiled between the functional bulb (109, 111) and the CPU bulb (106) for tracking rotational and stretching molecular motions.

12. The instrument (100) as claimed in claim 1, wherein the second or the third capillary (102, 103) is optionally fitted with a heating element placed between the functional bulb (109, 111) and the CPU bulb (106) to note the impact of heat on the molecular dynamics and record the change in physicochemical properties.

13. The instrument (100) as claimed in claim 1, wherein the second or the third capillary (102, 103) is optionally fitted with an electrical element placed between the functional bulb (109, 111) and the CPU bulb (106) to note the impact of electricity on the molecular dynamics and record the change in physicochemical properties.

14. The instrument (100) as claimed in claim 1, wherein the buffer bulb (108, 110) and the functional bulb (109, 111) of the second or the third capillary (102, 103) is optionally fitted with a magnetic element to note the impact of magnetic field on the molecular dynamics and record the change in physicochemical properties.

15. The instrument (100) as claimed in claim 1, wherein the second or the third capillary (102, 103) is optionally having a spiral shaped capillary between the functional bulb (109, 111) and the CPU bulb (106) to note its impact on the molecular dynamics and record the change in the physicochemical properties.

16. A method of measuring viscosity of a chemical solution by the instrument (100) as claimed in claim 1, said method comprising:

a) allowing a solution of known density to be filled in reservoir bulb (105) till a marked level 'L';
b) closing the top openings of second and fourth capillaries (102, 104);
c) inserting a plunger barrel assembly in the top opening of the third capillary (103);
d) allowing with the plunger barrel assembly, the solution into the third capillary (103) such that the functional bulb (109, 111) is filled fully and the buffer bulb (108, 110) is filled $2/3^{rd}$ of its capacity;
e) withdrawing the stopper from the fourth capillary (104) so that the solution starts to fall in the third capillary (103);
f) recording the time 't' taken by the solution to fall from a pre-indicated level above the functional bulb (109, 111) to a pre-indicated level below the functional bulb (109, 111);
g) repeating steps (a) to (e) for solvent of known density and viscosity and recording time '$t_0$' taken by said solvent to fall from a pre-indicated level above the functional bulb (109, 111) to a pre-indicated level below the functional bulb (109, 111); and
h) calculating the viscosity of the solution by inputting the value of t and to in:

$$\eta = \left[\left(\frac{t}{t_0}\right)\left(\frac{\rho}{\rho_0}\right)\right]\eta_0 \qquad (1)$$

wherein t and $t_0$ are viscous flow times, $\rho$ and $\rho_0$ densities, $\eta$ and $\eta_0$ are viscosities of solution and solvent respectively.

17. A method of measuring surface tension of a chemical solution by the instrument (100) as claimed in claim 1, said method comprising:

a) allowing a solution of known density to be filled in reservoir bulb (105) till a level 'L';
b) closing the top openings of third and fourth capillaries (103, 104);
c) inserting plunger barrel assembly in the top opening of the second capillary (102);
d) allowing through the plunger barrel assembly, the solution into the second capillary (102) such that the functional bulb (109, 111) is filled fully and the buffer bulb (108, 110) is filled $2/3^{rd}$ of its capacity;
e) withdrawing the stopper from the fourth capillary (104) so that the solution starts the fall in the second capillary (102);
i) recording the number of drops 'n' that fall from the second capillary (102) into the CPU bulb (106) when the solution falls from a pre-indicated level above the functional bulb (109, 111) to a pre-indicated level below the functional bulb (109, 111);
j) repeating steps (a) to (e) for solvent of known density and surface tension and recording number of drops '$n_0$' of said solvent when the solvent falls from a pre-indicated level above the functional bulb (109, 111) to a pre-indicated level below the functional bulb (109, 111); and
f) calculating the surface tension of the solution by inputting the value of n and $n_0$ in:

$$\gamma = \left[ \left( \frac{n_0}{n} \right) \left( \frac{\rho}{\rho_0} \right) \right] \gamma_0 \qquad (3)$$

wherein n and $n_0$ are number of drops, $\rho$ and $\rho_0$ densities, $\gamma$ and $\gamma_0$ are surface tension of solution and solvent respectively.

**18.** A method of measuring interfacial tension IFT between two immiscible liquids having different densities by the instrument (100) as claimed in claims 1 and 9, said method comprising:

a) allowing a liquid of lower density to be filled in reservoir bulb (105) till a level 'L';
b) filling the functional bulb (109, 111) and 2/3$^{rd}$ of the buffer bulb (108, 110) of the IFT capillary (202) with a liquid of higher density with the plunger barrel assembly;
c) inserting the higher density liquid filled IFT capillary (202) into the first capillary (101) such that the lower end of the IFT capillary (202) dips in the liquid of lower density present in the reservoir bulb (205);
d) withdrawing the plunger barrel assembly from the IFT capillary (202);
e) recording the number of drops '$n_{HDL\ in\ LDL}$' of liquid of higher density that fall from the IFT capillary (202) into the liquid of lower density in the reservoir bulb (205) when the liquid of higher density falls from a pre-indicated level indicated above the functional bulb (204) to a pre-indicated level indicated below the functional bulb (204);
f) repeating steps (a) to (e) for recording the number of drops '$n_{HDL\ in\ air}$' of liquid of higher density that fall from the IFT capillary (202) into the empty reservoir bulb (205) when the liquid of higher density falls from a pre-indicated level indicated above the functional bulb (204) to a pre-indicated level indicated below the functional bulb (204); and
g) calculating the IFT between two immiscible liquids having different densities by inputting the value of '$n_{HDL\ in\ LDL}$' and '$n_{HDL\ in\ air}$' in following equation:

$$\gamma_{IFT} = \left( \frac{n_{HDL\ in\ air}}{n_{HDL\ in\ LDL}} \right) \left( \frac{\rho_{HDL} - \rho_{LDL}}{\rho_{HDL}} \right) \gamma_{HDL} \qquad (5)$$

wherein '$n_{HDL\ in\ LDL}$' and '$n_{HDL\ in\ air}$' are numbers of drops of high density liquids in low density liquids and high density liquids in air, $\rho_{HDL}$ and $\rho_{LDL}$ are densities of liquid of higher density and liquid of lower density respectively and $\gamma_{HDL}$ is surface tension of HDL.

**19.** A method of determining wetting coefficient of a sample liquid by the instrument (100) as claimed in claims 1 and 9, said method comprising:

a) allowing the sample liquid to be filled in reservoir bulb (205) till a level 'L';
b) inserting a closed IFT capillary (202) in the liquid in the reservoir bulb (205);
c) withdrawing the socket and recording the height 'h' that the liquid in time 't' rises from the lower tip of the IFT capillary; and
d) calculating the wetting coefficient by:

$$\frac{\eta h^2}{t} = w_c^{\ 0} + A\gamma + B\gamma^2 \qquad (6)$$

wherein 'h' is the height risen by liquid in time 't', A and B are coefficients, y is surface tension and $\eta$ viscosity of the sample liquid.

**Patentansprüche**

**1.** Instrument (100) zur quantitativen Bestimmung der physikalisch-chemischen Eigenschaften einer chemischen Substanz, wobei das Instrument (100) umfasst:

eine erste Kapillare (101), die an ihrem unteren Ende vertikal mit einer Reservoirkugel (105) verbunden ist, wobei die erste Kapillare (101) verwendet wird zum Aufgeben einer flüssigen Probe der chemischen Substanz, deren chemische Eigenschaft bestimmt werden soll;

eine CPU-Kugel (zentrale Kugel) (106), die durch eine U-förmige Kapillare (107) mit der Reservoirkugel (105) verbunden ist, so dass die CPU-Kugel (106) auf einem höheren Niveau als die Reservoirkugel (105) positioniert ist; und

**dadurch gekennzeichnet, dass** drei Kapillaren, nämlich die zweite, dritte und vierte Kapillare (102, 103, 104), parallel zueinander und parallel zu der ersten Kapillare (101) angeordnet sind und sich in die CPU-Kugel (106) öffnen;

wobei das Instrument (100) in einen mit Flüssigkeit gefüllten Mantel (112) eingetaucht ist, um es gegen äußere Einflüsse zu isolieren und abzuschirmen, so dass die Öffnungen der vier Kapillaren außerhalb der Flüssigkeit bleiben.

2. Instrument (100) nach Anspruch 1, worin die zweite Kapillare (102) in die CPU-Kugel (106) von ihrem oberen Ende her eingesetzt ist, wobei sich die Kapillare in der Mitte der CPU-Kugel (106) öffnet.

3. Instrument (100) nach Anspruch 1, worin die dritte Kapillare (103) und die vierte Kapillare (104) mit der CPU-Kugel (106) angrenzend an ihr oberes Ende verbunden sind.

4. Instrument (100) nach Anspruch 1, worin die zweite und die dritte Kapillare (102, 103) Pufferkugeln (108, 110) und funktionale Kugeln (109, 111) entlang ihrer Länge aufweisen, wobei die Pufferkugeln (108, 110) auf einem höheren Niveau als die funktionalen Kugel (109, 111) positioniert sind.

5. Instrument (100) nach Anspruch 1, worin die dritte und vierte Kapillare (103, 104) an ihren proximalen Enden vorzugsweise in einem Winkel von 30° bis 60° gebogen sind, bevor sie mit der CPU-Kugel (106) verbunden sind.

6. Instrument (100) nach einem der vorhergehenden Ansprüche, worin die Reservoirkugel (105), die CPU-Kugel (106), die Pufferkugeln (108, 110) und die funktionalen Kugeln (109, 111) so ausgewählt sind, dass sie eine kugelförmige, elliptische, zylindrische oder quaderförmig Form haben.

7. Instrument (100) nach Anspruch 1, worin der Mantel aus transparentem Material besteht und mit transparenter Flüssigkeit gefüllt ist.

8. Instrument (100) nach Anspruch 1, worin die Flüssigkeit innerhalb des mit Flüssigkeit gefüllten Mantels (112) temperaturgesteuert ist.

9. Instrument (100) nach Anspruch 1, worin die erste Kapillare (101) eine separate Kapillare aufnehmen kann, nämlich eine IFT-Kapillare (202) zum Messen der Grenzflächenspannung zwischen zwei Flüssigkeiten, so dass eine Flüssigkeit eine höhere Dichte als die andere aufweist, wobei die IFT-Kapillare (202) entlang ihrer Länge eine Pufferkugel (203) und eine funktionale Kugel (204) aufweist.

10. Instrument (100) nach Anspruch 1, worin die Kapillaren, Kugeln an mehreren Stellen mit Sensoren versehen sind, um automatisch das Niveau der Probenflüssigkeit anzuzeigen, die Anzahl der Tropfen zu erfassen, die in die CPU-Kugel (106) oder in die Reservoirkugel (105) tropfen.

11. Instrument (100) nach Anspruch 1, worin die zweite und die dritte Kapillare (102, 103) zwischen der funktionalen Kugel (109, 111) und der CPU-Kugel (106) schlangenförmig sind, um molekulare Rotations- und Streckbewegungen zu verfolgen.

12. Instrument (100) nach Anspruch 1, worin die zweite oder die dritte Kapillare (102, 103) optional mit einem Heizelement ausgestattet ist, das zwischen der funktionalen Kugel (109, 111) und der CPU-Kugel (106) angeordnet ist, um den Einfluss von Wärme auf die Molekulardynamik festzustellen und die Änderung der physikalisch-chemischen Eigenschaften aufzuzeichnen.

13. Instrument (100) nach Anspruch 1, worin die zweite oder die dritte Kapillare (102, 103) optional mit einem elektrischen Element ausgestattet ist, das zwischen der funktionalen Kugel (109, 111) und der CPU-Kugel (106) angeordnet ist, um den Einfluss von Elektrizität auf die Molekulardynamik festzustellen und die Änderung der physikalisch-chemischen Eigenschaften aufzuzeichnen.

**14.** Instrument (100) nach Anspruch 1, worin die Pufferkugel (108, 110) und die funktionale Kugel (109, 111) der zweiten oder der dritten Kapillare (102, 103) optional mit einem Magnetelement ausgestattet sind, um die Auswirkungen des Magnetfelds auf die Molekulardynamik festzustellen und die Änderung der physikalisch-chemischen Eigenschaften aufzuzeichnen.

**15.** Instrument (100) nach Anspruch 1, worin die zweite oder die dritte Kapillare (102, 103) optional eine spiralförmige Kapillare zwischen der funktionalen Kugel (109, 111) und der CPU-Kugel (106) aufweist, um ihre Auswirkung auf die Molekulardynamik festzustellen und die Änderung der physikalisch-chemischen Eigenschaften aufzuzeichnen.

**16.** Verfahren zum Messen der Viskosität einer chemischen Lösung mit dem Instrument (100) nach Anspruch 1, wobei das Verfahren umfasst:

a) Zulassen, dass eine Lösung mit bekannter Dichte in die Reservoirkugel (105) bis zu einem markierten Niveau 'L' gefüllt wird;
b) Schließen der oberen Öffnungen der zweiten und der vierten Kapillare (102, 104);
c) Einsetzen einer Kolben-Zylinder-Anordnung in die obere Öffnung der dritten Kapillare (103)
d) Zulassen, dass mit der Kolben-Zylinder-Anordnung die Lösung in die dritte Kapillare (103) derart gefüllt wird, dass die funktionale Kugel (109, 111) vollständig gefüllt ist und die Pufferkugel (108, 110) zu 2/3 ihrer Kapazität gefüllt ist;
e) Abnehmen des Stopfens von der vierten Kapillare (104), so dass die Lösung in die dritte Kapillare (103) einzulaufen beginnt;
f) Aufzeichnen der Zeit 't', die die Lösung benötigt, um von einem vorab angegebenen Niveau über der funktionalen Kugel (109, 111) auf ein vorab angegebenes Niveau unterhalb der funktionalen Kugel (109, 111) zu fallen;
g) Wiederholen der Schritte (a) bis (e) für ein Lösungsmittel mit bekannter Dichte und Viskosität und Aufzeichnen der Zeit '$t_0$', die das Lösungsmittel benötigt, um von einem vorab angegebenen Niveau über der funktionalen Kugel (109, 111) auf ein vorab angegebenes Niveau unter der funktionalen Kugel (109, 111) zu fallen; und
h) Berechnen der Viskosität der Lösung durch Eingabe des Wertes von und t und $t_0$ in:

$$\eta = \left[\left(\frac{t}{t_0}\right)\left(\frac{\rho}{\rho_0}\right)\right]\eta_0 \qquad (1)$$

,

worin t und $t_0$ Viskositätsfließzeiten, $\rho$ und $\rho_0$ Dichten, $\eta$ und $\eta_0$ Viskositäten der Lösung bzw. des Lösungsmittels sind.

**17.** Verfahren zum Messen der Oberflächenspannung einer chemischen Lösung mit dem Instrument (100) nach Anspruch 1, wobei das Verfahren umfasst:

a) Zulassen, dass eine Lösung mit bekannter Dichte in die Reservoirkugel (105) bis zu einem Niveau 'L' gefüllt wird;
b) Schließen der oberen Öffnungen der dritten und der vierten Kapillare (103, 104);
c) Einsetzen einer Kolben-Zylinder-Anordnung in die obere Öffnung der zweiten Kapillare (102)
d) Zulassen, dass mit der Kolben-Zylinder-Anordnung die Lösung in die zweite Kapillare (102) derart gefüllt wird, dass die funktionale Kugel (109, 111) vollständig gefüllt ist und die Pufferkugel (108, 110) zu 2/3 ihrer Kapazität gefüllt ist;
e) Abnehmen des Stopfens von der vierten Kapillare (104), so dass die Lösung in die zweite Kapillare (102) einzulaufen beginnt;
i) Aufzeichnen der Anzahl 'n' von Tropfen, die von der zweiten Kapillare (102) in die CPU-Kugel (106) fallen wenn die Lösung von einem vorher angegebenen Niveau über der funktionalen Kugel (109, 111) auf ein vorher angegebenes Niveau unter der funktionalen Kugel (109, 111) fällt;
j) Wiederholen der Schritte (a) bis (e) für ein Lösungsmittel bekannter Dichte und Oberflächenspannung und Aufzeichnen der Anzahl '$n_0$' von Tropfen des Lösungsmittels wenn das Lösungsmittel von einem vorher angegebenen Niveau über der funktionalen Kugel (109, 111) auf ein vorher angegebenes Niveau unter der funktionalen Kugel (109, 111) fällt; und
f) Berechnen der Oberflächenspannung der Lösung durch Eingabe des Werts von n und $n_0$ in:

$$\gamma = \left[\left(\frac{n_0}{n}\right)\left(\frac{\rho}{\rho_0}\right)\right]\gamma_0 \qquad (3)$$

,

worin $n$ und $n_0$ die Anzahl von Tropfen, $\rho$ und $\rho_0$ Dichten, $\gamma$ und $\gamma_0$ Viskositäten der Lösung bzw. des Lösungsmittels sind.

18. Verfahren zum Messen der Grenzflächenspannung IFT zwischen zwei nicht mischbaren Flüssigkeiten mit unterschiedlichen Dichten mit dem Instrument (100) nach den Ansprüchen 1 und 9, wobei das Verfahren umfasst:

a) Zulassen, dass eine Flüssigkeit geringerer Dichte in die Vorratskugel (105) bis zu einem Niveau 'L' eingefüllt wird;
b) Befüllen der funktionale Kugel (109, 111) und 2/3 der Pufferkugel (108, 110) der IFT-Kapillare (202) mit einer Flüssigkeit höherer Dichte mit der Kolben-Zylinder-Anordnung;
c) Einsetzen der mit einer Füssigkeit mit höherer Dichte gefüllten IFT-Kapillare (202) in die erste Kapillare (101), so dass das untere Ende der IFT-Kapillare (202) in die Flüssigkeit mit geringerer Dichte eintaucht, die in die Reservoirkugel (205) eintaucht;
d) Abnehmen der Kolben-Zylinder-Anordnung von der IFT-Kapillare (202);
e) Aufzeichnen der Anzahl '$n_{HDL\,in\,LDL}$' der Tropfen der Flüssigkeit höherer Dichte, die von der IFT-Kapillare (202) in die Flüssigkeit geringerer Dichte in der Reservoirkugel (205) fallen wenn die Flüssigkeit höherer Dichte von einem vorab angegebenen Niveau oberhalb der funktionalen Kugel (204) auf ein vorab angegebenes Niveau unterhalb der funktionalen Kugel (204) fällt;
f) Wiederholen der Schritte (a) bis (e) zum Aufzeichnen der Anzahl '$n_{HDL\,in\,Luft}$' von Tropfen der Flüssigkeit höherer Dichte, die von der IFT-Kapillare (202) in die leere Reservoirkugel (205) fallen wenn die Flüssigkeit höherer Dichte von einem vorher angegebenen Niveau über der funktionalen Kugel (204) auf ein vorher angegebenes Niveau unterhalb der funktionalen Kugel (204) fällt; und
g) Berechnen der IFT zwischen zwei nicht mischbaren Flüssigkeiten mit unterschiedlichen Dichten durch Eingabe des Werts '$n_{HDL\,in\,LDL}$' und '$n_{HDL\,in\,Luft}$' in die folgende Gleichung:

$$\gamma_{IFT} = \left(\frac{n_{HDL\,in\,Luft}}{n_{HDL\,in\,LDL}}\right)\left(\frac{\rho_{HDL} - \rho_{LDL}}{\rho_{HDL}}\right)\gamma_{HDL} \qquad (5)$$

wobei '$n_{HDL\,in\,LDL}$' und '$n_{HDL\,in\,Luft}$' Anzahlen von Tropfen von Flüssigkeiten mit höherer Dichte in Flüssigkeiten mit niedriger Dichte und Flüssigkeiten mit höherer Dichte in Luft sind, $\rho_{HDL}$ und $\rho_{LDL}$ Dichten von Flüssigkeiten mit höherer Dichte bzw. Flüssigkeiten mit geringerer Dichte sind, $\gamma_{HDL}$ die Oberflächenspannung von HDL ist.

19. Verfahren zur Bestimmung des Benetzungskoeffizienten einer Probenflüssigkeit durch das Instrument (100) nach den Ansprüchen 1 und 9, wobei das Verfahren umfasst:

a) Zulassen, dass die Probenflüssigkeit in die Reservoirkugel (205) bis zu einem Niveau 'L' gefüllt wird;
b) Einsetzen einer geschlossenen IFT-Kapillare (202) in die Flüssigkeit in der Reservoirkugel (205);
c) Herausnehmen der Hülse und Aufzeichnen der Höhe 'h', um die die Flüssigkeit in der Zeit 't' von der unteren Spitze der IFT-Kapillare ansteigt; und
d) Berechnen des Benetzungskoeffizienten durch:

$$\frac{\eta h^2}{t} = w_c{}^0 + A\gamma + B\gamma^2 \qquad (6)$$

,

worin 'h' die Höhe ist, um welche die Flüssigkeit in der Zeit 't' ansteigt, A und B Koeffizienten sind, $\gamma$ die Oberflächenspannung ist und $\eta$ die Viskosität der Probenflüssigkeit ist.

**Revendications**

1. Instrument (100) pour la détermination quantitative de propriétés physico-chimiques d'une substance chimique, ledit instrument (100) comprenant :

   un premier capillaire (101) raccordé verticalement à une ampoule de réservoir (105) à son extrémité inférieure, ledit premier capillaire (101) est utilisé pour charger un échantillon liquide de la substance chimique dont la propriété chimique doit être déterminée ;
   une ampoule CPU (106) raccordée à l'ampoule de réservoir (105) par un capillaire en forme de U (107) de telle sorte que l'ampoule CPU (106) est positionnée à un niveau plus élevé que l'ampoule de réservoir (105) ; et **caractérisé en ce que**
   trois capillaires à savoir un deuxième, un troisième et un quatrième capillaire (102, 103, 104) sont placés parallèlement les uns aux autres et parallèlement au premier capillaire (101) et peuvent s'ouvrir dans l'ampoule CPU (106) ;
   ledit instrument (100) est plongé dans une enveloppe remplie de liquide (112) afin de l'isoler et de le protéger contre tout effet extérieur, de telle sorte que les ouvertures des quatre capillaires restent hors du liquide.

2. Instrument (100) selon la revendication 1, dans lequel le deuxième capillaire (102) est inséré dans l'ampoule CPU (106) à partir de son extrémité supérieure, ledit capillaire s'ouvre au centre de l'ampoule CPU (106).

3. Instrument (100) selon la revendication 1, dans lequel le troisième capillaire (103) et le quatrième capillaire (104) sont raccordés à l'ampoule CPU (106) à proximité de son extrémité supérieure.

4. Instrument (100) selon la revendication 1, dans lequel les deuxième et troisième capillaires (102, 103) ont des ampoules tampons (108, 110) et des ampoules fonctionnelles (109, 111) le long de leur longueur, l'ampoule tampon (108, 110) étant positionnée à un niveau plus élevé que l'ampoule fonctionnelle (109, 111).

5. Instrument (100) selon la revendication 1, dans lequel les troisième et quatrième capillaires (103, 104) sont courbés à leur extrémité proximale de préférence à l'angle de 30° à 60° avant d'être raccordés à l'ampoule CPU (106).

6. Instrument (100) selon l'une quelconque des revendications précédentes, dans lequel l'ampoule de réservoir (105), l'ampoule CPU (106), les ampoules tampons (108, 110) et les ampoules fonctionnelles (109, 111) sont sélectionnées pour avoir une forme sphérique, elliptique, cylindrique ou cuboïdale.

7. Instrument (100) selon la revendication 1, dans lequel l'enveloppe est faite d'un matériau transparent et est remplie avec un liquide transparent.

8. Instrument (100) selon la revendication 1, dans lequel le liquide à l'intérieur de l'enveloppe remplie de liquide (112) est régulé en température.

9. Instrument (100) selon la revendication 1, dans lequel le premier capillaire (101) est capable de recevoir un capillaire séparé à savoir un capillaire IFT (202) pour mesurer une tension interfaciale entre deux liquides, de telle sorte qu'un liquide présente une densité plus élevée que l'autre, ledit capillaire IFT (202) ayant une ampoule tampon (203) et une ampoule fonctionnelle (204) le long de sa longueur.

10. Instrument (100) selon la revendication 1, dans lequel les capillaires, les ampoules sont équipés de capteurs à plusieurs emplacements pour indiquer automatiquement le niveau de liquide d'échantillon, détecter le nombre de gouttes qui tombent dans l'ampoule CPU (106) ou l'ampoule de réservoir (105).

11. Instrument (100) selon la revendication 1, dans lequel le deuxième et le troisième capillaire (102, 103) sont spiralés entre l'ampoule fonctionnelle (109, 111) et l'ampoule CPU (106) pour suivre les mouvements moléculaires de rotation et d'étirement.

12. Instrument (100) selon la revendication 1, dans lequel le deuxième ou le troisième capillaire (102, 103) est facultativement équipé d'un élément chauffant placé entre l'ampoule fonctionnelle (109, 111) et l'ampoule CPU (106) pour constater l'impact de la chaleur sur la dynamique moléculaire et enregistrer le changement des propriétés physico-chimiques.

**13.** Instrument (100) selon la revendication 1, dans lequel le deuxième ou le troisième capillaire (102, 103) est facultativement équipé d'un élément électrique placé entre l'ampoule fonctionnelle (109, 111) et l'ampoule CPU (106) pour constater l'impact de l'électricité sur la dynamique moléculaire et enregistrer le changement des propriétés physico-chimiques.

**14.** Instrument (100) selon la revendication 1, dans lequel l'ampoule tampon (108, 110) et l'ampoule fonctionnelle (109, 111) du deuxième ou du troisième capillaire (102, 103) sont facultativement équipées d'un élément magnétique pour constater l'impact d'un champ magnétique sur la dynamique moléculaire et enregistrer le changement des propriétés physico-chimiques.

**15.** Instrument (100) selon la revendication 1, dans lequel le deuxième ou le troisième capillaire (102, 103) présente facultativement un capillaire en forme de spirale entre l'ampoule fonctionnelle (109, 111) et l'ampoule CPU (106) pour constater son impact sur la dynamique moléculaire et enregistrer le changement des propriétés physico-chimiques.

**16.** Procédé de mesure de la viscosité d'une solution de produit chimique par l'instrument (100) selon la revendication 1, ledit procédé comprenant :

a) le fait de permettre à une solution de densité connue de remplir l'ampoule de réservoir (105) jusqu'à un niveau « L » marqué ;
b) la fermeture des ouvertures supérieures des deuxième et quatrième capillaires (102, 104) ;
c) l'insertion d'un ensemble cylindre de piston dans l'ouverture supérieure du troisième capillaire (103) ;
d) le fait de permettre, avec l'ensemble cylindre de piston, à la solution d'entrer dans le troisième capillaire (103) de telle sorte que l'ampoule fonctionnelle (109, 111) est totalement remplie et l'ampoule tampon (108, 110) est remplie au 2/3 de sa capacité ;
e) le retrait du bouchon à partir du quatrième capillaire (104) pour que la solution commence à tomber dans le troisième capillaire (103) ;
f) l'enregistrement du temps « t » pris par la solution pour tomber à partir d'un niveau préalablement indiqué au-dessus de l'ampoule fonctionnelle (109, 111) jusqu'à un niveau préalablement indiqué en dessous de l'ampoule fonctionnelle (109, 111) ;
g) la répétition des étapes (a) à (e) pour un solvant de densité et de viscosité connues et l'enregistrement du temps « $t_0$ » pris par ledit solvant pour tomber d'un niveau préalablement indiqué au-dessus de l'ampoule fonctionnelle (109, 111) jusqu'à un niveau préalablement indiqué en dessous de l'ampoule fonctionnelle (109, 111) ; et
h) le calcul de la viscosité de la solution en introduisant la valeur de t et de $t_0$ dans :

$$\eta = \left[\left(\frac{t}{t_0}\right)\left(\frac{\rho}{\rho_0}\right)\right]\eta_0 \qquad (1)$$

dans lequel t et $t_0$ sont les temps d'écoulement visqueux, $\rho$ et $\rho_0$ les densités, $\eta$ et $\eta_0$ sont les viscosités de la solution et du solvant respectivement.

**17.** Procédé de mesure d'une tension superficielle d'une solution de produit chimique par l'instrument (100) selon la revendication 1, ledit procédé comprenant :

a) le fait de permettre à une solution de densité connue de remplir l'ampoule de réservoir (105) jusqu'à un niveau « L » ;
b) la fermeture des ouvertures supérieures des troisième et quatrième capillaires (103, 104) ;
c) l'insertion d'un ensemble cylindre de piston dans l'ouverture supérieure du deuxième capillaire (102) ;
d) le fait de permettre, par l'intermédiaire de l'ensemble cylindre de piston, à la solution d'entrer dans le deuxième capillaire (102) de telle sorte que l'ampoule fonctionnelle (109, 111) est totalement remplie et l'ampoule tampon (108, 110) est remplie au 2/3 de sa capacité ;
e) le retrait du bouchon à partir du quatrième capillaire (104) pour que la solution commence à tomber dans le deuxième capillaire (102) ;
i) l'enregistrement du nombre de gouttes « n » qui tombent à partir du deuxième capillaire (102) dans l'ampoule CPU (106) quand la solution tombe à partir d'un niveau préalablement indiqué au-dessus de l'ampoule fonctionnelle (109, 111) jusqu'à un niveau préalablement indiqué en dessous de l'ampoule fonctionnelle (109, 111) ;

j) la répétition des étapes (a) à (e) pour un solvant de densité et de tension superficielle connues et l'enregistrement du nombre de gouttes « $n_0$ » dudit solvant quand le solvant tombe à partir d'un niveau préalablement indiqué au-dessus de l'ampoule fonctionnelle (109, 111) jusqu'à un niveau préalablement indiqué en dessous de l'ampoule fonctionnelle (109, 111) ; et

f) le calcul de la tension superficielle de la solution en introduisant la valeur de n et de $n_0$ dans :

$$\gamma = \left[\left(\frac{n_0}{n}\right)\left(\frac{\rho}{\rho_0}\right)\right]\gamma_0 \qquad (3)$$

dans lequel n et $n_0$ sont le nombre de gouttes, $\rho$ et $\rho_0$ les densités, $\gamma$ et $\gamma_0$ sont la tension superficielle de la solution et du solvant respectivement.

18. Procédé de mesure d'une tension interfaciale IFT entre deux liquides non miscibles ayant des densités différentes par l'instrument (100) selon les revendications 1 et 9, ledit procédé comprenant :

a) le fait de permettre à un liquide de densité plus basse de remplir l'ampoule de réservoir (105) jusqu'à un niveau « L » ;

b) le remplissage de l'ampoule fonctionnel (109, 111) et de 2/3 de l'ampoule tampon (108, 110) du capillaire IFT (202) avec un liquide de densité plus élevée avec l'ensemble cylindre de piston ;

c) l'insertion du capillaire IFT (202) rempli avec le liquide de densité plus élevée dans le premier capillaire (101) de telle sorte que l'extrémité inférieure du capillaire IFT (202) plonge dans le liquide de densité plus basse présent dans l'ampoule de réservoir (205) ;

d) le retrait de l'ensemble cylindre de piston à partir du capillaire IFT (202) ;

e) l'enregistrement du nombre de gouttes « $n_{HDL\,in\,LDL}$ » de liquide de densité plus élevée qui tombent à partir du capillaire IFT (202) dans le liquide de densité plus basse dans l'ampoule réservoir (205) quand le liquide de densité plus élevée tombe à partir d'un niveau préalablement indiqué, indiqué au-dessus de l'ampoule fonctionnelle (204) jusqu'à un niveau préalablement indiqué, indiqué en dessous de l'ampoule fonctionnelle (204) ;

f) la répétition des étapes (a) à (e) pour enregistrer le nombre de gouttes « $n_{HDL\,in\,air}$ » de liquide de densité plus élevée qui tombent à partir du capillaire IFT (202) dans l'ampoule de réservoir (205) vide quand le liquide de densité plus élevée tombe à partir d'un niveau préalablement indiqué, indiqué au-dessus de l'ampoule fonctionnelle (204) jusqu'à un niveau préalablement indiqué, indiqué en dessous de l'ampoule fonctionnelle (204) ; et

g) le calcul de l'IFT entre deux liquides non miscibles ayant des densités différentes en introduisant la valeur de « $n_{HDL\,in\,LDL}$ » et de « $n_{HDL\,in\,air}$ » dans l'équation suivante :

$$\gamma_{IFT} = \left(\frac{n_{HDL\,in\,air}}{n_{HDL\,in\,LDL}}\right)\left(\frac{\rho_{HDL} - \rho_{LDL}}{\rho_{HDL}}\right)\gamma_{HDL} \qquad (5)$$

dans laquelle « $n_{HDL\,in\,LDL}$ » et « $n_{HDL\,in\,air}$ » sont les nombres de gouttes de liquides de densité élevée dans des liquides de densité basse et des liquides de densité élevée dans l'air, $\rho_{HDL}$ et $\rho_{LDL}$ sont les densités d'un liquide de densité plus élevée et d'un liquide de densité plus basse respectivement et $\gamma_{HDL}$ est la tension superficielle de HDL.

19. Procédé de détermination d'un coefficient de mouillage d'un liquide d'échantillon par l'instrument (100) selon les revendications 1 et 9, ledit procédé comprenant :

a) le fait de permettre au liquide d'échantillon de remplir l'ampoule de réservoir (205) jusqu'à un niveau « L » ;

b) l'insertion d'un capillaire IFT (202) fermé dans le liquide dans l'ampoule de réservoir (205) ;

c) le retrait de la douille et l'enregistrement de la hauteur « h » que le liquide atteint en un temps « t » à partir de la pointe inférieure du capillaire IFT ; et

d) le calcul du coefficient de mouillage par :

$$\frac{\eta h^2}{t} = w_c{}^0 + A\gamma + B\gamma^2 \qquad (6)$$

dans lequel « h » est la hauteur atteinte par le liquide en un temps « t », A et B sont des coefficients, $\gamma$ est une tension superficielle et $\eta$ une viscosité du liquide d'échantillon.

Figure 1

Figure 2

Digital version: IR and optoelectronic sensors

Figure 3

refractive index
optical sensor

microcalormeter
temperature
detectot

temperature sensitive
wire

heat regulator and sensor

electrically conducting wire

heat conducting slots

conductance
wire connected
to sample

uniform capillary

controlled pressure unit
for liquid valve and pressure
regulation

Figure 4

rotational
fluid flow

Figure 5

Figure 6

temperature sensor

streamliner

temperature sensor

Figure 7

Figure 8

temperature sensor

streamliner

temperature sensor

electrically conducting wire

temperature
sensor

rotational
fluid flow

streamliner

temperature
sensor

Figure 9

electrical coil for
passing current

shoe magnet of
specified
magnetic field

electrically conducting wire

rotational
fluid flow

temperature
sensor

streamliner

temperature
sensor

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4583395 A

• US 6393898 B1

**Non-patent literature cited in the description**

• Introduction To Polymer